# EUROPÄISCHE PATENTSCHRIFT

(11) **EP 3 252 515 B1**
(45) Veröffentlichungstag und Bekanntmachung des Hinweises auf die Patenterteilung: **24.10.2018**
(21) Anmeldenummer: 17177687.5
(22) Anmeldetag: 26.02.2016
(51) Int. Cl.: G02B 15/02, G02B 17/06, G02B 27/30

(54) **REFLEXIVER STRAHLFORMER**
REFLECTIVE BEAM FORMER
DISPOSITIF DE FORMATION DE FAISCEAUX RÉFLECTIFS

(30) Priorität: 14.04.2015 DE 102015105673
(43) Veröffentlichungstag der Anmeldung: 06.12.2017
(62) Teilanmeldung aus: 16157597.2
(73) Patentinhaber: asphericon GmbH, 07747 Jena (DE)
(72) Erfinder: Moritz, Jens, 07743 Jena (DE); Kiontke, Sven, 07743 Jena (DE); Fuchs, Ulrike, 07745 Jena (DE)
(74) Vertreter: Patentanwälte Geyer, Fehners & Partner mbB

(56) Entgegenhaltungen:
- EP-A1- 1 679 538
- EP-A2- 0 649 042
- EP-A2- 0 883 010
- US-A1- 2014 253 999

## Beschreibung

### Gebiet der Erfindung

Die Erfindung betrifft einen reflexiven Strahlformer zur Änderung des Durchmessers eines kollimierten Lichtstrahls. Ein solcher Strahlformer umfasst in einem Strahlengang nachgeordnet mindestens eine erste Spiegelfläche eines ersten Wölbungstyps, mindestens eine zweite Spiegelfläche und mindestens eine dritte Spiegelfläche eines zweiten Wölbungstyps. Die Formen der Spiegelflächen sind dabei aufeinander abgestimmt, so dass ein über eine erste oder dritte Spiegelfläche in den Strahlformer eintretender kollimierter Lichtstrahl den Strahlformer über eine dritte bzw. erste Spiegelfläche als kollimierter Lichtstrahl verlässt.

### Stand der Technik

Laserstrahlen, die auf vielen verschiedenen technischen und nicht technischen Gebieten verwendet werden, haben nach dem Austritt aus der Quelle in der Regel noch nicht die für eine spezifische Anwendung nötige Form und den nötigen Durchmesser, sie müssen daher in Form und Größe angepasst werden. Dies erfolgt mittels Strahlformern. Im Stand der Technik sind dazu verschiedene Lösungen auf refraktiver und reflexiver Basis bekannt. Reflexive Systeme haben gegenüber refraktiven Strahlformern den Vorteil, dass sie bereits intrinsisch achromatisiert sind und keine Anpassungen bezüglich der Wellenlängen zur Korrektur von Aberrationen notwendig ist. Strahlformer für Hochleistungslaser lassen sich darüber hinaus nur mit Spiegeln realisieren, da Linsen bei den Leistungseinträgen von beispielsweise 40 kW und mehr zerstört werden können. Auch bei niedrigeren Leistungen können beispielsweise Verunreinigungen oder Lufteinschlüsse im Glas dazu führen, dass lokal Laserlicht absorbiert wird, was im schlimmsten Fall zum Platzen der Linse führen kann. Allerdings werden bei reflexiven Systemen mehrere Spiegel benötigt, sofern der Aufbau *on-axis* erfolgen soll, für die zusätzlichen Spiegel müssen in der Regel auch individuelle Halterungen vorgesehen werden.

Ein reflexiver Strahlformer wird beispielsweise in der US 4,205,902 beschrieben. Die dort beschriebenen Systeme basieren auf dem Aufbau eines Schwarzschild-Teleskops, bei dem ein einfallender Strahl über einen konvexen und einen konkaven Spiegel, welche konzentrisch angeordnet sind, in eine Bildebene abgebildet wird. Aufgrund seiner Konstruktion ist der Aufbau bis zur dritten Ordnung für sphärische Aberration, Koma und Astigmatismus korrigiert. Das in der US 4,205,902 beschriebene System besteht aus der Kombination zweier Schwarzschild-Teleskope, wobei das zweite umgekehrt aufgebaut ist, hier trifft ein einfallender paralleler Strahl zunächst auf eine konkave Oberfläche, von der er auf eine konvexe Oberfläche abgebildet wird, so dass hinter dem konvexen Spiegel ein virtuelles Bild entsteht. Alle Spiegel sind sphärisch geformt. Zur Strahlvergrößerung wird ein einfallender Strahl zunächst von dem konvexen Spiegel eines vorwärts aufgebauten Schwarzschild-Teleskops auf einen konkaven Spiegel dieses Teleskops gelenkt und in einen Punkt abgebildet. In dem Strahlengang zwischen dem konkaven Spiegel und dem Bildpunkt ist der konvexe Spiegel eines rückwärts aufgebauten Schwarzschild-Teleskops angeordnet, welcher den Strahl auf einen konkaven Spiegel leitet, welcher wiederum einen parallelen Ausgangsstrahl mit gegenüber dem Eingangsstrahl vergrößerten Durchmesser erzeugt. Die Spiegel sind daher alle *off-axis* aufgebaut, der einfallende Strahl und der ausgehende Strahl verlaufen parallel und versetzt zueinander, wobei die vektorielle Richtung für beide Strahlen dieselbe ist. Insgesamt werden bei diesem System also vier Spiegel verwendet, je zwei davon sind konzentrisch angeordnet, d.h. sie haben einen gemeinsamen Krümmungsmittelpunkt, jedoch erfolgt die Anordnung jeweils *off-axis.*

Ein einfaches System zur Strahlaufweitung bzw. Strahlverengung wird in der japanischen Offenlegungsschrift JP 04301613 A beschrieben. Das System besteht aus zwei parabolisch geformten Spiegeln, einem konvexen und einem konkaven. Um einen Strahl aufzuweiten, wird beispielsweise ein einfallender Strahl geringen Durchmessers auf die konvexe Oberfläche des einen Spiegels geleitet und von diesem im Mittel im rechten Winkel auf die Oberfläche des konkaven Parabolspiegels gelenkt. Dort wiederum verlässt das Licht den Spiegel als aufgeweiteter Strahl mit einem gegenüber dem einfallenden Strahl vergrößerten Durchmesser und läuft in die gleiche Richtung wie der einfallende Strahl, jedoch versetzt zu diesem weiter.

In der EP 0 649 042 B1 wird ein System beschrieben, bei dem der Strahldurchmesser verändert wird und der Strahl *on-axis* weiter läuft, wobei außerdem das Verhältnis der Durchmesser von einfallendem zu austretendem Strahl variiert werden kann. Zur Strahlvergrößerung wird ein auf einem parabolischen konvexen Spiegel eintreffender Strahl umgelenkt und auf einen konkaven, parabolischen Spiegel gelenkt, wie bereits im Zusammenhang mit der JP 04301613 A ausgeführt wurde. Die Oberflächen beider Spiegel sind konfokal angeordnet, d.h. der Brennpunkt des konkaven Spiegels fällt mit dem Brennpunkt des konvexen Spiegels zusammen. Beide parabolischen Flächen sind an einem monolithischen Metallblock ausgebildet. Da es sich bei den Spiegelflächen um parabolische Flächen handelt, kann das Verhältnis der Durchmesser von einfallendem zu ausfallendem Strahl geändert werden, in dem der Bereich, in welchem der einfallende Strahl auf die parabolische Fläche trifft, variiert wird. Auf diese Weise können verschiedene Krümmungen abgegriffen werden. Dazu wird ein System von zwei ebenen Spiegeln verwendet, ein erster ebener Spiegel lenkt den einfallenden Strahl auf die konvexe Oberfläche, von dort wird das Licht zum konkaven Spiegel und dann auf einen zweiten Planspiegel gelenkt, der das ausgehende Bündel paralleler Strahlen mit gegenüber dem Eingangsstrahlenbündel vergrößerten Durchmesser *on-axis* weiterführt. Durch Verschieben der beiden Planspiegel gegeneinander lassen sich verschiedene Bereiche der parabolischen Spiegelflächen erreichen, so dass verschiedene Vergrößerungen eingestellt werden können. Nachteilig dabei ist, dass die Wege der beiden Planspiegel aufeinander abgestimmt sein müssen, was mit einer aufwendigen Steuerung einhergeht.

### Beschreibung der Erfindung

Aufgabe der Erfindung ist es daher, ein möglichst robustes, mit wenig Aufwand betreibbares System mit möglichst wenigen Spiegeln zu entwickeln, mit welchem dennoch mehrere Durchmesserverhältnisse eingestellt werden können und welches optional auch ohne größeren technischen Aufwand in den Strahlengang bestehender Systeme modular eingekoppelt werden kann.

Diese Aufgabe wird bei einem reflexiven Strahlformer der eingangs beschriebenen Art dadurch gelöst, dass die mindestens eine zweite Spiegelfläche als Planspiegelfläche mit einer Planspiegelachse senkrecht zur Spiegelebene ausgestaltet ist und der Strahlformer mehrere dritte, gewölbte Spiegelflächen eines zweiten Wölbungstyps umfasst, welche sich in ihren Krümmungen unterscheiden. Der eine der beiden Wölbungstypen ist konvex und der andere ist konkav. Der Strahlformer umfasst außerdem Auswahlmittel zur Auswahl einer der mehreren dritten gewölbten Spiegelflächen durch Auswahl einer Position für eine Planspiegelfläche im Strahlengang entlang der Planspiegelachse zur variablen Einstellung des Verhältnisses der Durchmesser von eintretendem zu austretendem Lichtstrahl. Außerdem ist die zweite Spiegelfläche im Strahlengang zwischen der ersten und einer ausgewählten der mehreren dritten Spiegelflächen so angeordnet, dass die erste und die ausgewählte dritte Spiegelfläche vermittelt durch die zweite Spiegelfläche konfokal zueinander positioniert sind.

Im Gegensatz zum Stand der Technik, insbesondere der EP 0 649 042 B1, ist hier eine Planspiegelfläche zwischen der ausgewählten der mehreren dritten Spiegelflächen und der ersten Spiegelfläche angeordnet. Diese zweite Spiegelfläche, die Planspiegelfläche, ist mit den Auswahlmitteln gekoppelt bzw. ein Teil der Auswahlmittel. Somit muss zur Variation einer bestimmten Veränderung des Strahldurchmessers nur die Position einer einzigen Spiegelfläche angepasst werden.

Die Auswahlmittel zur Auswahl einer der mehreren dritten gewölbten Spiegelflächen können dabei auf verschiedene Weise ausgestaltet sein. Zum einen ist es möglich, genau eine Planspiegelfläche, also eine zweite Spiegelfläche vorzusehen und diese auf einen Planspiegelträger aufzubringen, der also die Planspiegelfläche trägt. Der Planspiegelträger ist dann entlang der Planspiegelachse verschiebbar und / oder gegen diese neigbar, so dass zwischen den mehreren dritten Spiegelflächen gewechselt werden kann, also jeweils durch Verschiebung und / oder Neigung eine andere dritte Spiegelfläche gewählt wird.

In einer alternativen Ausgestaltung umfassen die Auswahlmittel mehrere, in den Strahlengang entlang der Planspiegelachse an vorgegebenen Positionen alternativ einbringbare Planspiegelträger, welche jeweils eine Planspiegelfläche tragen. Je nach Auswahl wird also einer der Planspiegelträger in den Strahlengang eingekoppelt. Gegenüber der erstgenannten Alternative hat dies den Vorteil, dass keine Verschiebung notwendig ist, wodurch die Genauigkeit der Positionierung der Planspiegelflächen erhöht wird, zudem kann die Wechselgeschwindigkeit erhöht werden.

In einer dritten Alternative sieht die Erfindung mehrere gleichartige Planspiegelhalter vor, welche über Kopplungsmittel alternativ in den Strahlengang einkoppelbar sind, wobei ein Planspiegelhalter mindestens einen Planspiegel mit einer Planspiegelfläche hält und mit jedem Planspiegel eine andere dritte Spiegelfläche auswählbar ist. Hierbei handelt es sich um eine sehr robuste Variante, die beispielsweise zu bevorzugen ist, wenn die Vergrößerung nicht allzu oft gewechselt werden muss. Laufen ein- und ausfallender Strahl parallel, jedoch entgegengesetzt, so kann ein solcher Spiegelhalter beispielsweise symmetrisch aufgebaut sein, d.h. mit zwei Planspiegeln und zweifachen Kopplungsmitteln ausgestaltet sein, so dass mit einem Planspiegelhalter je nach Kopplung zwei verschiedene Durchmesserverhältnisse eingestellt werden können. Vorteil bei der Variante mit Planspiegelhalter ist, dass keine Verschiebung entlang der Strahlenachse erfolgen muss, für die Auswahl einer anderen Vergrößerung wird einfach ein anderer Spiegelhalter eingesetzt, wobei die Kopplung justierfrei erfolgt.

Zur justierfreien Kopplung umfassen die Kopplungsmittel bevorzugt ein erstes Kopplungselement, welches am Planspiegelhalter ausgebildet ist oder dort angeordnet ist, und ein zweites Kopplungselement, welches am Grundträger ausgebildet ist oder dort angeordnet ist. Das erste Kopplungselement ist mit dem zweiten Kopplungselement kraft- und / oder formschlüssig verbindbar, beispielsweise durch eine Steckverbindung oder eine Schraubverbindung.

Indem zum Auswahl bzw. zur Einstellung des Verhältnisses der Durchmesser von eintretendem zu austretendem kollimierten Lichtstrahl eine zwischen die gewölbten Spiegelflächen geschaltete Planspiegelfläche verwendet wird, deren Position veränderbar ist, sei es durch Verschiebung entlang der Planspiegelachse, sei es durch alternative Einbringung verschiedener Planspiegelflächen an verschiedenen Positionen, so dass die konfokale Ausrichtung der beiden gewölbten Spiegelflächen zueinander erhalten bleibt, lässt sich die Einstellung der Vergrößerung auf die Verwendung eines Planspiegels bzw. einer Planspiegelfläche reduzieren, wobei das einfallende und das auslaufende Strahlenbündel außerdem parallel zueinander verlaufen, jedoch in entgegengesetzten Richtungen. Im Gegensatz dazu werden im Stand der Technik zwei Elemente verwendet. Die Störanfälligkeit wird auf diese Weise reduziert, zudem müssen nicht die Wege bzw. Positionen mehrerer Spiegel aufeinander abgestimmt werden.

In einer besonders bevorzugten Ausgestaltung der Erfindung sind die dritten Spiegelflächen auf einen gemeinsamen Grundträger in voneinander verschiedenen Abständen zur Planspiegelachse fest angeordnet. Ergänzend oder alternativ ist auch die erste Spiegelfläche auf dem Grundträger fest angeordnet. Dieser kann als monolithischer Block ausgestaltet, entsprechend geschliffen und poliert und mit Spiegelflächen überzogen werden.

Die mindestens eine erste Spiegelfläche und die mehreren dritten Spiegelflächen sind überwiegend konvex bzw. überwiegend konkav, wobei der Ausdruck "überwiegend" bedeutend, dass die vorherrschende Wölbung konvex bzw. konkav ist, jedoch zur Korrektur von Abbildungsfehlern auch lokal andere Wölbungen realisiert sein können, beispielsweise durch asphärische Elemente oder Freiformkorrekturen.

Werden sowohl die mindestens eine erste als auch die mehreren dritten Spiegelflächen auf einem monolithischen Grundträger angeordnet, so verringert dies die Störanfälligkeit weiter, da die erste und die dritten Spiegelflächen immer fest zueinander positioniert sind, so dass hier keine zufällige Verstellung und damit Verschlechterung der Strahlformung erfolgen kann. Das zweite Kopplungselement für einen optionalen Planspiegelhalter ist dann am Grundträger ausgebildet.

In einer besonders robusten und einfach zu handhabenden Abwandlung der Erfindung ist der Grundträger als ein monolithisches Element ausgebildet, welches aus einem Material mit einer höheren Brechzahl als Luft und für Licht des Lichtstrahls transparent ist. Es umfasst mindestens eine Planspiegelfläche, welche am Grundträger in einem vorgegebenen Abstand zu diesem ausgebildet ist. Zur Einstellung verschiedener Vergrößerungen umfasst das Element jedoch bevorzugt mehrere, zueinander parallel in verschiedenen, vorgegebenen Abständen zu der Grundebene des monolithischen Elements an diesem ausgebildete Planspiegelflächen, von denen jede einer anderen dritten Spiegelfläche zugeordnet ist. Der Grundkörper kann beispielsweise quaderförmig ausgebildet sein. An einer Seite des Quaders beispielsweise aus einem Glas, welches die genannten Bedingungen erfüllt, sind die erste gewölbte Spiegelfläche und die mehreren gewölbten Spiegelflächen ausgebildet. Der Lichtstrahl tritt über eine senkrecht zur Strahlrichtung stehende Grenzfläche in den Grundträger ein, wird an der ersten Spiegelfläche reflektiert, wobei bei allen Reflexionen im Innern bevorzugt Totalreflexion ausgenutzt wird, oder aber die entsprechende Seite des Quaders nach innen verspiegelt ist. Der Lichtstrahl wird auf die ebene Planspiegelfläche gelenkt, dort ebenfalls wieder reflektiert und auf eine dritte Spiegelfläche gelenkt, wobei die Auswahl der dritten Spiegelfläche von der Position der Planspiegelfläche in Bezug auf die dritte Spiegelfläche abhängt. Von dort wird der Strahl abermals reflektiert und tritt senkrecht durch eine Grenzfläche wieder aus. Auf diese Weise lassen sich mit einem einzigen Element *on-axis* Strahlvergrößerungen oder -verkleinerungen erreichen.

In einer besonders bevorzugten Ausgestaltung sind die erste gewölbte Spiegelfläche und die mehreren dritten gewölbten Spiegelflächen Ausschnittsflächen aus Paraboloiden oder Zylinderspiegeln mit parabolischem Querschnitt. Sie können aber auch als Freiformflächen ausgebildet sein. Sind sie als Ausschnittsflächen von Zylinderspiegeln ausgebildet, so erfolgt die Strahlausweitung nicht rotationssymmetrisch, d.h. kreisförmig, sondern nur elliptisch. In einem solchen Fall lassen sich bevorzugt mehrere reflexive Strahlformer sequentiell hintereinander anordnen, wobei ein zweiter Strahlformer um einen vorgegebenen Winkel, bevorzugt 90°, verdreht zum ersten Strahlformer angeordnet ist, so dass ein kollimierter Lichtstrahl vollrotationssymmetrisch aufgeweitet oder eingeengt wird.

Die optische Achse des einfallenden Lichtstrahls, die optische Achse des austretenden Lichtstrahls und die Planspiegelachse sind für eine kompakte Bauweise bevorzugt zueinander parallel angeordnet, wobei die optische Achse des einfallenden und des austretenden Lichtstrahls auch auf einer gemeinsamen Geraden liegen können.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:
- Fig. 1: den grundlegenden Aufbau eines reflexiven Strahlformers,
- Fig. 2 a-c): eine erste Ausgestaltung eines solchen Strahlformers,
- Fig. 3: den grundlegenden Aufbau eines weiteren reflexiven Strahlformers,
- Fig. 4: den Aufbau eines solchen Strahlformers für mehrere Vergrößerungen,
- Fig. 5: eine Sequenz mehrerer Strahlformer,
- Fig. 6: eine Sequenz mehrerer Strahlformer in Perspektivansicht,
- Fig. 7: eine weitere Ausgestaltung eines reflexiven Strahlformers und
- Fig. 8: eine Ausgestaltung eines Strahlformers mit parabolischen Flächen.

### Ausführliche Beschreibung der Zeichnungen

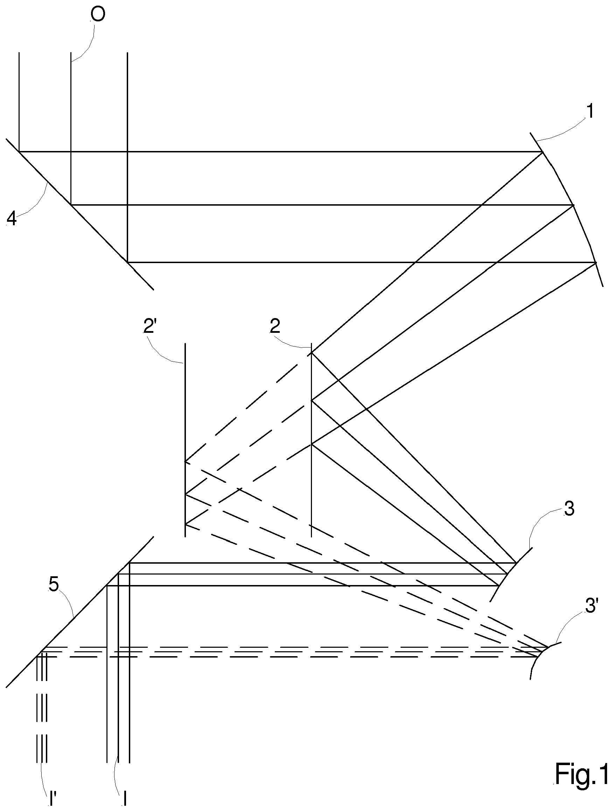

In Fig. 1 ist der grundlegende Aufbau einer ersten Ausgestaltung eines reflexiven Strahlformers gezeigt, mit dem der Durchmesser eines kollimierten Lichtstrahls, genauer eines kollimierten Bündels paralleler Strahlen, geändert werden kann. Der Strahlformer umfasst in einem Strahlengang einander nachgeordnet mindestens eine erste Spiegelfläche 1 eines ersten Wölbungstyps, mindestens eine zweite Spiegelfläche 2, 2' und mindestens eine dritte Spiegelfläche 3, 3', wobei die Spiegelflächen 1, 2 und 3 bzw. 1, 2' und 3' aufeinander abgestimmt sind, so dass ein über eine erste Spiegelfläche 1 oder eine dritte Spiegelfläche 3, 3' in den Strahlformer eintretender kollimierter Lichtstrahl den Strahlformer über eine dritte Spiegelfläche 3, 3' bzw. eine erste Spiegelfläche 1 als kollimierter Lichtstrahl wieder verlässt.

Der Strahlformer umfasst mehrere dritte Spiegelflächen 3, 3' eines zweiten Wölbungstyps. Die mehreren dritten Spiegelflächen 3, 3' unterscheiden sich in ihren Krümmungen. Einer der beiden Wölbungstypen ist überwiegend konvex und der andere der beiden Wölbungstypen überwiegend konkav. Im vorliegenden Fall ist beispielhaft die erste Spiegelfläche 1 überwiegend konkav gewölbt, die mehreren dritten Spiegelflächen 3, 3' sind überwiegend konvex gewölbt. Die Zahl der Spiegelflächen jedes der Wölbungstypen ist dabei nicht festgelegt. Beispielsweise können auch mehrere überwiegend konkave Spiegelflächen und eine oder mehrere überwiegend konvexe Spiegelflächen im Strahlformer realisiert sein. Der Strahl kann dabei entweder über eine der überwiegend konvexen Spiegelflächen in den Strahlformer eintreten, so dass er vergrößert wird, oder zur Strahlverkleinerung über eine der überwiegend konkaven Spiegelflächen. Der Ausdruck "überwiegend" bezeichnet dabei den vorherrschenden Krümmungstyp, es können jedoch insbesondere an den Spiegelrandflächen auch Korrekturen, beispielsweise asphärische Korrekturen angebracht sein, die den anderen Wölbungstyp aufweisen, jedoch nur lokal. Bei den Spiegelflächen kann es sich um Ausschnittsflächen aus Paraboloiden oder Zylinderspiegeln mit parabolischem Querschnitt handeln, sie können aber auch sphärisch oder als Freiformflächen ausgebildet sein. Im in Fig. 1 gezeigten Beispiel ist - ohne Beschränkung der Allgemeinheit - der erste Wölbungstyp konkav und der zweite Wölbungstyp konvex gewählt. Gleichfalls wäre es möglich, den ersten Wölbungstyp des ersten Spiegels 1 konvex und den zweiten Wölbungstyp mit den dritten Spiegelflächen 3, 3' konkav zu wählen. Der Übersichtlichkeit halber wird jedoch hier nur diese Variante gezeigt. Im vorliegenden Beispiel ist genau eine erste Spiegelfläche 1 dargestellt und zwei dritte Spiegelflächen 3, 3'. Auch dies erfolgt nur der Anschaulichkeit halber, ebenso können mehrere erste Spiegelflächen 1 vorhanden sein und nur eine dritte Spiegelfläche 3, es ist aber auch möglich, sowohl mehrere erste Spiegelflächen 1 als auch mehrere dritte Spiegelflächen 3 bereit zu stellen.

Die mindestens eine zweite Spiegelfläche 2 ist als Planspiegelfläche ausgestaltet, sie weist eine Planspiegelachse senkrecht zur Planspiegelfläche, d.h. der Spiegelebene auf. Die zweite Spiegelfläche 2 ist im Strahlengang zwischen der ersten und einer ausgewählten der mehreren dritten Spiegelflächen 3, 3' so angeordnet, dass die erste Spiegelfläche 1 und die ausgewählte dritte Spiegelfläche konfokal zueinander positioniert sind. Im vorliegenden Fall wird also erst durch die Vermittlung der zweiten Spiegelfläche 2 eine konfokale Orientierung der ersten Spiegelfläche 1 und der auch hier ausgewählten dritten Spiegelfläche 3 hergestellt. Gleiches gilt für die gestrichelt dargestellte Ausführung mit einer weiteren zweiten Spiegelfläche 2' und einer weiteren dritten Spiegelfläche 3' analog. Auf diese Weise lässt sich gegenüber dem Stand der Technik, wo die beiden gewölbten Spiegelflächen unmittelbar und ohne zwischengeschalteten Spiegel konfokal zueinander positioniert sein müssen, eine höhere Flexibilität bei einfacherer Fertigung erreichen.

Der Strahlformer umfasst außerdem Auswahlmittel zur Auswahl einer der mehreren dritten gewölbten Spiegelflächen 3, 3' durch Auswahl einer Position für eine Planspiegelfläche 2, 2' im Strahlengang entlang der Planspiegelachse zur variablen Einstellung des Verhältnisses der Durchmesser von eintretendem zu austretendem kollimierten Lichtstrahl. Wird beispielsweise die Position ausgewählt, in der die zweite Planspiegelfläche 2 in Fig.1 eingezeichnet ist, so wird die dritte Spiegelfläche 3 ausgewählt. Befindet sich die zweite Spiegelfläche an der Position, an der die zweite Spiegelfläche 2' eingezeichnet ist, so wird - dargestellt durch die gestrichelten Linien - eine weitere dritte Spiegelfläche 3' ausgewählt. Diese Auswahl kann auf verschiedene Weisen erfolgen, wie weiter unten dargelegt wird.

Je nachdem aus welcher Richtung das Strahlenbündel in den Strahlformer einfällt, wird der Strahldurchmesser entweder vergrößert oder verkleinert. Trifft ein Strahlenbündel bzw. der Lichtstrahl zunächst auf die konkav gewölbte erste Spiegelfläche 1, so verlässt er den Strahlformer je nach ausgewählter dritter Spiegelfläche entweder über die dritte Spiegelfläche 3 oder die weitere dritte Spiegelfläche 3'. Um auf die Spiegelfläche 3' zu treffen, muss der Lichtstrahl nach der Reflexion an der ersten Spiegelfläche 1 einen längeren Weg zurücklegen als zur dritten Spiegelfläche 3, so dass der Durchmesser des über die dritte Spiegelfläche 3 austretenden Lichtstrahls größer als der Durchmesser des über die weitere dritte Spiegelfläche 3' austretenden Lichtstrahls ist.

Bei umgekehrter Strahlführung lassen sich verschiedene Durchmesser von Eingangsstrahlen auf einen einheitlichen, größeren Durchmesser des Ausgangsstrahls vergrößern. Die in Fig.1 gezeigte Ausführung stellt dabei nur ein Beispiel dar, es können auch mehrere dritte Spiegelflächen 3 vorhanden sein oder mehrere Spiegelflächen 1, so dass beispielsweise ein Durchmesser eines Eingangsstrahls auf verschiedene Durchmesser eines Ausgangsstrahls vergrößert werden kann.

Indem zur Auswahl einer der dritten Spiegelflächen 3, 3' verschiedene Planspiegelflächen 2, 2' verwendet werden, kann der Justieraufwand gegenüber einer Ausführung mit gekrümmten Spiegeln, die direkt aneinander grenzen, reduziert werden, da die Justage nur in drei Freiheitsgraden erfolgen muss. Asphärische Komponenten ermöglichen im Vergleich zur Verwendung von sphärischen Komponenten eine verbesserte Strahlqualität, einen verkleinerten Bauraum und das Arbeiten mit größeren Strahldurchmessern.

Durch zusätzliche Umlenkspiegel 4 und 5 kann der Strahlengang *on-axis* geführt werden, was die modulare Verwendung des Systems hinsichtlich der Konfiguration einer Schnittstelle erleichtert. Dabei laufen jedoch die - beispielsweise über die dritten Spiegelflächen 3, 3' austretenden - Strahlen nicht mittig in Bezug auf die optische Achse, sondern zu dieser versetzt. Dieser Strahlversatz muss bei der Auslegung entsprechender Geräte, die dieses System verwenden, berücksichtigt werden.

In einer bevorzugten Ausgestaltung sind die dritten Spiegelflächen 3, 3' auf einen gemeinsamen Grundträger in voneinander verschiedenen, jedoch wohldefinierten Abständen zur Planspiegelachse fest angeordnet. Dies erleichtert die Justierung, da dann sichergestellt ist, dass eine Relativbewegung der mehreren dritten gekrümmten Spiegelflächen zueinander ausgeschlossen ist, was eine genauere Justierung der möglichen Positionen für die Planspiegelflächen 2, 2' ermöglicht. Noch genauer wird die Positionierung, wenn auch die erste Spiegelfläche auf dem Grundträger fest angeordnet ist. Dies erlaubt auch, die erste Spiegelfläche 1 und die mehreren dritten Spiegelflächen 3, 3' in einem Arbeitsgang herzustellen. Insbesondere wenn mehrere erste Spiegelflächen verwendet werden, ist es auch möglich, ausschließlich die ersten Spiegelflächen auf den gemeinsamen Grundträger anzuordnen, bevorzugt aber zusammen mit den dritten Spiegelflächen 3, 3'.

Die Auswahlmittel lassen sich auf verschiedene Weise realisieren.

Eine erste Möglichkeit besteht darin, einen entlang der Planspiegelachse zur Auswahl einer der mehreren dritten Spiegelflächen 3, 3' verschiebbaren und / oder neigbaren Planspiegelträger vorzusehen, welcher die Planspiegelfläche 2 trägt. In diesem Fall wird also nur eine einzige Planspiegelfläche 2 verwendet, die jedoch mittels des verschiebbaren Planspiegelträgers in verschiedene Positionen entlang der Planspiegelachse verfahren werden kann. In diesem Fall kennzeichnen die Zeichen 2 und 2' in Fig.1 verschiedene Positionen ein und derselben Planspiegelfläche. Die Verschiebung kann beispielsweise motorisch über eine Stellkurve erfolgen, so dass gezielt die den dritten Spiegelflächen 3, 3' zugeordneten Positionen angefahren werden.

Eine weitere Möglichkeit besteht darin, mehrere in den Strahlengang entlang der Planspiegelachse an vorgegebenen Positionen bevorzugt alternativ einbringbare Planspiegelträger zu verwenden, welche jeweils eine Planspiegelfläche tragen. In diesem Fall handelt es sich bei den zweiten Spiegelflächen 2 und 2' in Fig. 1 um physisch verschiedene Spiegelflächen, von denen jede auf einem eigenen Planspiegelträger sitzt und in den Strahlengang eingeschwenkt, eingeschoben oder auf andere Weise eingebracht werden kann. Auch hier kann der Wechsel motorisch vollzogen werden, diese Variante benötigt zwar mehr Platz und mehr Material, erlaubt jedoch kürzere Umschaltzeiten zwischen einzelnen Strahldurchmesserverhältnissen.

Eine dritte Alternative umfasst mehrere gleichartige Planspiegelhalter, welche über Kopplungsmittel alternativ in den Strahlengang einkoppelbar sind, wobei ein Planspiegelhalter mindestens einen Planspiegel mit einer Planspiegelfläche hält und mit jedem Planspiegel eine andere dritte Spiegelfläche justierfrei auswählbar ist.

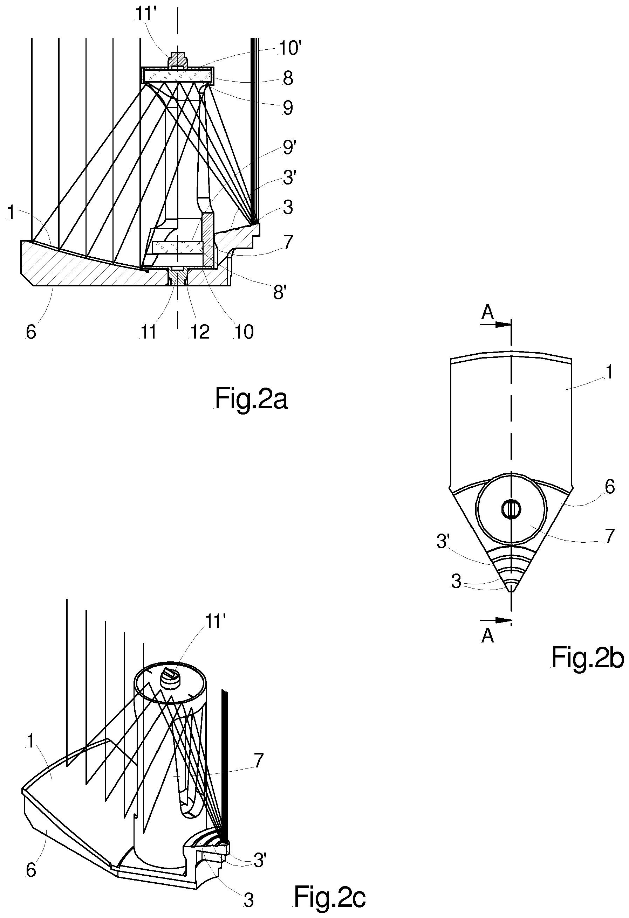

Diese letztgenannte Variante wird im Folgenden anhand von Fig. 2a-c näher erläutert. In Fig. 2a ist ein reflexiver Strahlformer in einem Querschnitt entlang einer Achse AA dargestellt, welche in der in Fig. 2b gezeigten Draufsicht zu erkennen ist. Fig. 2c zeigt den reflexiven Strahlformer in einer Perspektivansicht. Hier sind sowohl die mehreren dritten Spiegelflächen 3, 3', als auch die erste Spiegelfläche fest auf einem gemeinsamen Grundträger 6 angeordnet. Als Grundträger werden vorzugsweise Materialen verwendet, die einen in dem für den Einsatz relevanten Temperaturbereich möglichst geringen Wärmeausdehnungskoeffizienten besitzen, um Verfälschungen des Strahlengangs und Abbildungsfehler möglichst gering zu halten. Die Form des Grundträgers 6 entspricht dabei, wie in der Draufsicht in Fig. 2b zu erkennen ist, im Wesentlichen einem Ausschnitt aus einem Kreissegment, welches zum äußeren Umfang hin zusätzlich beschnitten wurde. Fertigungstechnisch ist es also möglich, aus einem kreisförmigen Monoblock mehrere solcher Grundträger 6 herzustellen. Die erste Spiegelfläche 1 und die mehreren dritten Spiegelflächen 3, 3' können dann in einem Arbeitsgang für den gesamten Monoblock hergestellt, d.h. geschliffen, poliert und mit einer Spiegelschicht überzogen werden, da die Rotationssymmetrie des Monoblocks ausgenutzt werden kann. Fertigungstechnisch ist es daher vorteilhaft, die Spiegelflächen nicht parabolisch, sondern nur mit parabolischem Querschnitt entlang der Achse AA herzustellen, was dann zur Folge hat, dass man, wenn man einen Strahl in zwei senkrecht zueinander stehenden Richtungen aufweiten bzw. verengen möchte, zwei Strahlformer in Reihe hintereinander anordnen muss, wobei die beiden Strahlformer um einen Winkel von 90° zueinander verkippt sind, um den Strahl in zwei zueinander orthogonalen Richtungen aufzuweiten bzw. einzuengen. Selbstverständlich ist es auch möglich, die erste Spiegelfläche 1 und die dritten Spiegelflächen 3, 3' anders auszugestalten, beispielsweise vollparabolisch, so dass der Lichtstrahl in einem Schritt vollständig rotationssymmetrisch - mit kreisförmigem Querschnitt vorher und nachher - verengt bzw. aufgeweitet wird.

Mit dem Grundträger 6 verbunden ist ein Planspiegelhalter 7. In dem Planspiegelhalter 7 sind zwei Planspiegel 8, 8' mit Planspiegelflächen 9, 9' angeordnet, sie werden vom Planspiegelhalter 7 gehalten. In der in Fig. 2a gezeigten Darstellung ist der Planspiegel 8 mit der Planspiegelfläche 9 im Strahlengang aktiv, dieser lenkt Licht von der ersten Spiegelfläche 1 zur dritten Spiegelfläche 3 oder umgekehrt. Der Planspiegelhalter 7 umfasst einen weiteren Planspiegelträger 8' mit einer weiteren Planspiegelfläche 9', die in der Darstellung in Fig. 2a nicht aktiv ist und im unteren Teil des Planspiegelhalters 7 angebracht ist. Der Planspiegelhalter 7 weist zwei Außenflächen 10, 10' auf. Mit einer der beiden Außenflächen - hier der Außenfläche 10 - liegt der Planspiegelhalter 7 auf dem Grundträger 6 auf. Entfernt man nun den Spiegelhalter 7 und dreht ihn um, so dass er mit der weiteren Außenfläche 10' auf dem Grundträger 6 aufliegt, so befindet sich der weitere Planspiegel 8' mit der weiteren Planspiegelfläche 9' im Strahlengang. Dadurch wird die weitere dritte Spiegelfläche 3' aktiviert, das Verhältnis von eingangsseitigem zu ausgangsseitigem Strahldurchmesser wird gegenüber der vorigen Kombination verändert. Dies wird erreicht, indem die Planspiegel 8, 8' - genauer gesagt die Planspiegelflächen 9, 9' - in verschiedenen Abständen zum Mittelpunkt der lotrechten Verbindung zwischen den beiden Außenflächen 10, 10' angeordnet sind: Die weitere Planspiegelfläche 9' befindet sich näher an diesem Mittelpunkt, so dass eine weiter innen liegende Spiegelfläche, hier die weitere dritte Spiegelfläche 3' aktiviert wird.

Bei einer sauberen Ausgestaltung der Außenflächen 10, 10' und der entsprechenden Gegenfläche auf dem Grundträger 6 reicht es grundsätzlich aus, den Planspiegelhalter 7 auf dem Grundträger 6 zu lagern. Während dies für einen Laboraufbau genügen mag, so erweist es sich im praktischem Einsatz als vorteilhaft, wenn der Planspiegelhalter 7 über Kopplungselemente mit dem Grundträger kraft- und / oder formschlüssig verbunden werden kann. Zu diesem Zweck ist am Planspiegelhalter 7 ein erstes Kopplungselement 11, 11' ausgebildet und am Grundträger 6 ein zweites Kopplungselement 12. Dabei ist das erste Kopplungselement 11, 11' auf jeder der beiden Außenflächen 10, 10' ausgebildet, um je nach verwendeter Spiegelfläche 9, 9' eine stabile Verbindung zu ermöglichen. Das erste Kopplungselement 11, 11' ist hier beispielhaft nach Art eines Zapfens ausgebildet, das zweite Kopplungselement 12 als Nut. Die Abmessungen von Zapfen und Nut sind dabei so gewählt, dass der Zapfen passgenau in der Nut sitzt. Um den Kraftschluss zu verbessern, können erstes Kopplungselement 11, 11' und zweites Kopplungselement 12 auch mit leichter Übermaßpassung versehen sein. Auch andere Arten der Verbindung, wie beispielsweise eine Schraubverbindung, sind denkbar; letztere ist insbesondere dann zu bevorzugen, wenn der reflexive Strahlformer nicht in der hier gezeigten aufrechten Position verwendet wird, sondern in liegender oder hängender Anordnung.

Der in Fig. 2a gezeigte Spiegelhalter 7 ist nur ein Ausführungsbeispiel für einen solchen Spiegelhalter. Auch sind Spiegelhalter denkbar, bei denen nur ein Planspiegel 8 mit einer Planspiegelfläche 9 enthalten ist, oder die Kopplungsmittel auf andere, im Stand der Technik bekannte Weise, ausgeführt sind. Sind die Planspiegel 8, 8' fest im Planspiegelhalter 7 angebracht, so benötigt man in der Regel mehrere Planspiegelhalter 7, sofern die Anzahl der dritten Spiegelflächen 3, 3' mehr als zwei beträgt. Alternativ können die Planspiegel 8 auch höhenverstellbar im Planspiegelhalter 7 fixiert sein, beispielsweise mit Schraubverbindungen. Die jeweiligen Positionen, an denen der Planspiegel 8 in der Höhe fixiert werden muss, um den Strahl von bzw. zu einer der dritten Spiegelflächen 3, 3' zu lenken, lassen sich beispielsweise mit Hilfe von Anschlägen und / oder Rastpositionen - in diesem Fall ist der Planspiegel 8 vorzugsweise mit Federn ausgestattet, die eine entsprechende Einrastung ermöglichen - realisieren.

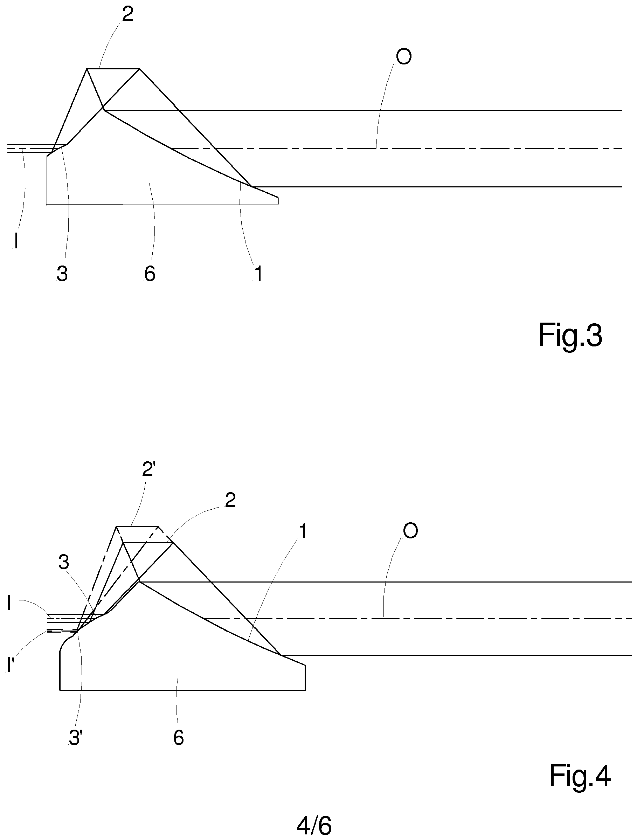

Eine andere Art der Strahlführung für einen reflexiven Strahlformer ist in Fig.3 skizziert. Hier ist eine sogenannte *on-axis*-Konfiguration dargestellt, bei der eine optische Achse I eines einfallenden Lichtstrahls und eine optische Achse O des austretenden Lichtstrahls auf einer gemeinsamen Geraden liegen, während in Fig.1 die optische Achse I des einfallenden Lichtstrahls, die optische Achse O des austretenden Lichtstrahls und die Planspiegelachse, d.h. die Normale der Planspiegelfläche, zwar zueinander parallel, jedoch nicht auf einer Achse angeordnet. Bei der in Fig.3 gezeigten Ausführung steht die Planspiegelachse senkrecht zu den optischen Achsen I und O. Die Konfiguration in Fig.3 ist nur für eine dritte Spiegelfläche 3 dargestellt, werden mehrere dritte Spiegelflächen verwendet, so sind die optischen Achsen I, I',... gegenüber der optischen Achse O des ausfallenden Lichtstrahls parallel versetzt, so wie es in Fig.1 bei Verwendung der Umlenkspiegel 4 und 5 ebenfalls der Fall ist. Dabei wurde ohne Beschränkung der Allgemeinheit davon ausgegangen, dass der Strahldurchmesser vergrößert werden soll, selbstverständlich ist es auch möglich, den Strahl mit größerem Durchmesser als Eingangsstrahl zu verwenden und den Durchmesser zu verkleinern.

Die erste Spiegelfläche 1 und die dritte Spiegelfläche 3 sind hier mit parabolischem Querschnitt - nicht als Paraboloide - ausgebildet, der Strahldurchmesser wird also nur in einer Raumrichtung verändert, so dass bei einem Eingangsstrahl mit gaußförmigen Intensitätsprofil und rundem Querschnitt der Ausgangsstrahl einen elliptischen Querschnitt aufweist. Eine Aufweitung findet bei dem in Fig.3 gezeigten Beispiel nur in der Zeichenebene statt. Um den Strahl wieder kreisförmig zu formen, kann das gleiche Spiegelsystem noch einmal sequentiell hinten angestellt werden und um vorzugsweise 90° verdreht werden.

Fertigungstechnisch lassen sich jedoch Spiegelflächen, die Zylinderspiegel mit parabolischem Querschnitt entsprechen, zumeist leichter herstellen als Ausschnittsflächen von Paraboloiden, so dass eine sequenzielle Anordnung mehrere Strahlformer hintereinander, die um einen Winkel verdreht gegeneinander angeordnet sind, eine bevorzugte Variante ist. Dies ermöglicht außerdem auch, die Querschnittsform des ausgehenden Strahls weiter zu modifizieren, wenn auch Winkel von weniger als 90° für die Verkippung zugelassen werden. Werden mehrere Strahlformer mit jeweils mehreren dritten Spiegelflächen 3, 3' hintereinander angeordnet, so ist es für eine vollständige Ausnutzung der Einstellmöglichkeiten notwendig, Mittel zur relativen Verschiebung der Strahlformer gegeneinander vorzusehen, so dass für einen Ausgangsstrahl des einen Strahlformers entsprechend eine der dritten Spiegelfläche des nachgeordneten Strahlformers für den eingehenden Strahl, der den Ausgangsstrahl des vorgeordneten Strahlformers entspricht, anzuwählen. Statt einer Verschiebung der einzelnen strahlformenden Elemente gegeneinander kann dies auch mittels Umlenkelementen, beispielsweise in Form von teilweise verschiebbaren Spiegeln, erreicht werden.

In Fig.4 ist einer Erweiterung der in Fig.3 gezeigten Konfiguration auf mehrere dritte Spiegelflächen 3, 3' in Analogie zu der bereits in Fig.1 bereits erläuterten Konfiguration dargestellt, die dritten Spiegelflächen 3, 3' und die erste Spiegelfläche 1 sind hier wieder auf einem gemeinsamen Grundträger 6 ausgebildet. Auch diese Anordnung lässt sich im Prinzip mit dem bereits im Zusammenhang mit Fig.2 beschriebenen Planspiegelhalter 7 verwenden.

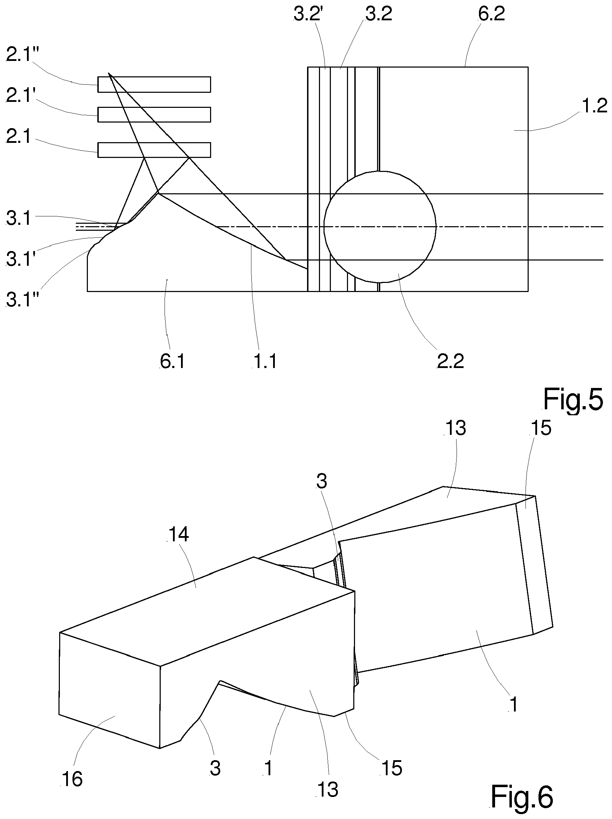

Fig.5 zeigt die Verwendung zweier hintereinander angeordneter Strahlformer aus Fig.4, welche in einem Winkel von 90° zueinander verdreht angeordnet sind. Die ersten Spiegelflächen 1.1 und dritten Spiegelflächen 3.1, 3.1' des ersten, vorderen Strahlformers sind auf einen Grundträger 6.1 angeordnet, die erste Spiegelfläche 1.2 und die dritten Spiegelflächen 3.2, 3.2' des zweiten, hinteren Strahlformers sind auf einem Grundträger 6.2 angebracht. Zur Auswahl der jeweiligen dritten Spiegelfläche 3.1, 3.1' umfasst der Strahlformer entweder mehrere zweite Spiegelflächen 2.1, 2.1', 2.2', oder einen in die jeweiligen Positionen verschiebbaren Planspiegel. Entsprechendes gilt für die zweite Spiegelfläche 2.2 des zweiten Strahlformers. Bei entsprechend größerem Abstand der ersten Spiegelflächen 1.1 und der dritten Spiegelflächen 3.1, 3.1' in - bezogen auf die Blattebene - horizontaler Richtung, d.h. parallel zu der Achse von einfallendem und austretendem Strahl, lassen sich auch Planspiegelhalter, wie sie bereits im Zusammenhang mit Fig. 2 beschrieben wurden, verwenden.

Eine besonders vorteilhafte Ausgestaltung eines reflexiven Strahlformers ist in Fig.6 dargestellt. Dieser Strahlformer umfasst einen Grundträger 13, welcher als ein monolithisches Element ausgebildet ist, das monolithische Element ist aus einem Material mit einer höheren Brechzahl als Luft - beispielsweise Glas - und ist für Licht des Lichtstrahls, dessen Strahldurchmesser verändert werden soll, transparent. An dem Grundträger 13 ist mindestens eine Planspiegelfläche 14 ausgebildet, welche sich in einem vorgegebenen Abstand zu einer Grundebene befindet. Die Grundebene wird hier durch eine Grundfläche 15 symbolisiert, welche sich in der Grundebene befindet. Die Grundebene kann aber auch einer Planspiegelfläche entsprechen, der Abstand wäre dann Null.

Der einfallende Strahl tritt beispielsweise an einer Frontfläche 16 in den Grundträger 13 ein und wird intern reflektiert. Bei entsprechender Glaswahl und passendem Reflexionswinkel kann dazu das Prinzip der Totalreflexion ausgenutzt werden. Auf diese Weise ergibt sich ein besonders einfach und kostengünstig herzustellendes, kompaktes und robustes Bauelement, welches den Strahlformer bildet. An Flächen, bei denen aufgrund des Einfallswinkels keine Totalreflexion möglich ist, wird an den Außenseiten des monolithischen Grundträgers 13 jeweils eine Spiegelschicht aufgebracht. Diese kann selbstverständlich auch zusätzlich aufgebracht werden, um unerwünschte Reflexionen zu unterdrücken. Bei der in Fig.6 dargestellten Anordnung sind zwei solcher prismenartigen Strahlformer hintereinander gereiht, wobei der hintere Strahlformer in einem von 90° abweichenden Winkel gegen den vorderen Strahlformer um eine gemeinsame Achse, die der optischen Achse entsprechen kann, gedreht ist, um Eingangsstrahlfehler, wie beispielsweise einen Rotationsfehler - wodurch der Eingangsstrahl nicht die volle Rotationssymmetrie aufweist - zu kompensieren.

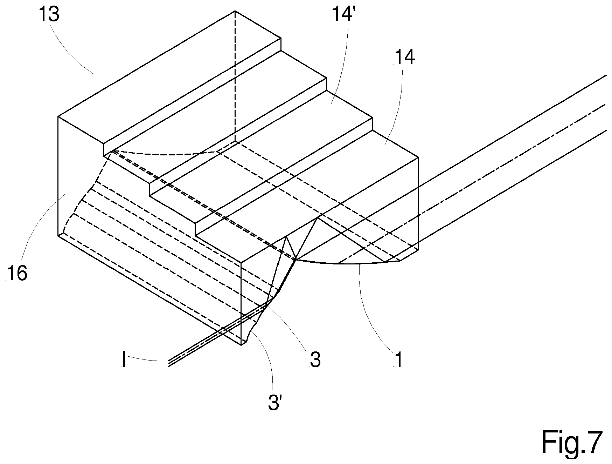

Fig.7 zeigt einen solchen, prismenartigen reflexiven Strahlformer, wie er in Fig.6 beschrieben wurde, welcher im Unterschied zu dem für eine einzige Vergrößerung bzw. Verkleinerung ausgelegten Strahlformer aus Fig.6 mehrere Vergrößerungen bzw. Verkleinerungen zulässt. Dazu sind am Grundträger 13 mehrere, zueinander parallel in verschiedenen Abständen zu der Grundebene - hier wieder der Grundfläche 15 - Planspiegelflächen 14, 14', ... ausgebildet, jede der verschiedenen Planspiegelflächen 14, 14', .... ist einer anderen dritten Spiegelfläche 3, 3',... zugeordnet. Die Auswahl der jeweiligen Vergrößerung erfolgt dann durch relative Verschiebung des reflexiven Strahlformers bzw. des Grundträgers 13 senkrecht zur optischen Achse I des einfallenden Lichtstrahls, und zwar in zwei eine Ebene aufspannenden Richtungen. Durch eine relative Verschiebung des Grundträgers 13 in der Höhe wird eine andere der dritten Spiegelflächen 3, 3', ... ausgewählt, und durch eine Verschiebung senkrecht dazu, hier also quer zur optischen Achse, erfolgt eine Auswahl der entsprechenden Planspiegelflächen 14, 14', ..., welche der jeweiligen dritten Spiegelfläche 3, 3',... zugeordnet ist. Dabei kann entweder der Strahlformer selbst verschoben werden, oder aber der Eingangsstrahl, oder beide.

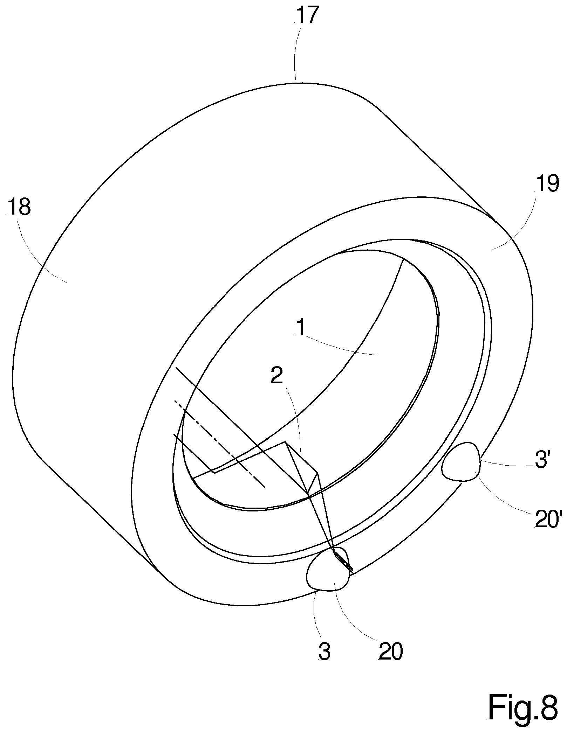

Eine weitere Variante für einen reflexiven Strahlformer, bei dem die erste gewölbte Spiegelfläche 1 und die dritten Spiegelflächen 3, 3' parabolisch geformt sind, also einen rotationssymmetrischen Strahl wieder in einen rotationssymmetrischen Strahl mit geändertem Durchmesser überführen, ist in Fig.8 dargestellt. Die Basis bildet ein Grundträger 17, welcher einen Querschnitt ähnlich dem in Fig.3 gezeigten Grundkörper 6 aufweist, insbesondere was die Lage der ersten Spiegelfläche 1 betrifft. Der Grundträger 17 ist ringförmig und hat die Form eines Zylindersegments mit einer äußeren Mantelfläche 18. Die erste Spiegelfläche 1 ist am inneren Umfang des Grundträgers 17 ausgebildet. Auf eine Ringfläche 19, welche an die Mantelfläche 18 anschließt und auf der der ersten Spiegelfläche 1 abgewandelten Seite des Grundträgers 17 ausgebildet ist, sind auf den Umfang verteilt, verschiedene Erhebungen 20, 20' ausgebildet oder angebracht, welche parabolisch geformt sind, und an denen die dritten Spiegelflächen 3, 3' angeformt sind. Die mindestens eine Spiegelfläche 2 ist hier nur symbolisch dargestellt. Durch Drehung des Grundkörpers 17 um die Rotationsachse des Zylinders bezogen auf die Mantelfläche 18 lassen sich verschiedene Erhebungen 20, 20', d.h. verschiedene dritte Spiegelflächen auswählen und so die Vergrößerung variieren. Dabei muss dafür gesorgt werden, dass die Position der zweiten Spiegelfläche 2 jeweils an die ausgewählte Erhebung 20, 20',... angepasst wird, was entweder durch eine Höhenverstellung oder durch Einbringen einer anderen zweiten Spiegelfläche erfolgen kann. Die Anordnung funktioniert selbstverständlich auch mit nur einer einzigen dritten Spiegelfläche, in diesem Fall wird auch nur eine zweite Spiegelfläche benötigt, bzw. auf eine Höhenverstellbarkeit kann verzichtet werden.

### Bezugszeichenliste

- 1: erste Spiegelfläche
- 2, 2': zweite Spiegelfläche
- 3, 3': dritte Spiegelfläche
- 4, 5: Umlenkspiegel
- 6: Grundträger
- 7: Planspiegelhalter
- 8, 8': Planspiegel
- 9, 9': Planspiegelfläche
- 10, 10': Außenfläche
- 11, 11': erstes Kopplungselement
- 12: zweites Kopplungselement
- 13: Grundträger
- 14, 14': Planspiegelfläche
- 15: Grundfläche
- 16: Frontfläche
- 17: Grundträger
- 18: äußere Mantelfläche
- 19: Ringfläche
- 20, 20': Erhebung

- I, O: optische Achse

## Patentansprüche

1. Reflexiver Strahlformer zur Änderung des Durchmessers eines kollimierten Lichtstrahls, umfassend in einem Strahlengang einander nachgeordnet,
- mindestens eine erste Spiegelfläche (1) eines ersten Wölbungstyps,
- mindestens eine zweite, als Planspiegelfläche (9, 9') ausgestaltete Spiegelfläche (2,2') mit einer Planspiegelachse senkrecht zur zweiten Spiegelfläche (2, 2') und
- mehrere dritte, gewölbte und in ihren Krümmungen unterschiedliche Spiegelflächen (3, 3') eines zweiten Wölbungstyps, wobei einer der beiden Wölbungstypen konvex und der andere konkav ist, und wobei die Formen der Spiegelflächen aufeinander abgestimmt sind, so dass ein über eine erste Spiegelfläche (1) oder eine dritte Spiegelfläche (3, 3') in den Strahlformer eintretender kollimierter Lichtstrahl den Strahlformer über eine dritte Spiegelfläche (3, 3') bzw. erste Spiegelfläche (1) als kollimierter Lichtstrahl verlässt,
- **dadurch gekennzeichnet, dass**
- die mindestens eine zweite Spiegelfläche (2, 2')im Strahlengang zwischen der ersten Spiegelfläche (1) und einer ausgewählten der mehreren dritten Spiegelflächen (3, 3') so angeordnet ist, dass die erste Spiegelfläche (1) und die ausgewählte dritte Spiegelfläche (3, 3') konfokal zueinander positioniert sind, und
- der Strahlformer Auswahlmittel zur Auswahl einer der mehreren dritten gewölbten Spiegelflächen (3, 3') durch Auswahl einer Position für eine Planspiegelfläche (9, 9') im Strahlengang entlang der Planspiegelachse zur variablen Einstellung des Verhältnisses der Durchmesser von eintretendem zu austretendem kollimierten Lichtstrahl umfasst.

2. Reflexiver Strahlformer nach Anspruch 1, **dadurch gekennzeichnet, dass** die dritten Spiegelflächen (3, 3') auf einem gemeinsamen Grundträger (6) in voneinander verschiedenen Abständen zur Planspiegelachse fest angeordnet sind und / oder die erste Spiegelfläche (1) auf dem Grundträger (6) fest angeordnet ist.

3. Reflexiver Strahlformer nach Anspruch 1 oder 2, **dadurch gekennzeichnet, dass** die Auswahlmittel
- einen entlang der Planspiegelachse zur Auswahl einer der mehreren dritten Spiegelfläche (3, 3') verschiebbaren und/oder neigbaren Planspiegelträger, welcher die Planspiegelfläche trägt, umfassen, oder
- mehrere, in den Strahlengang entlang der Planspiegelachse an vorgegebenen Positionen bevorzugt alternativ einbringbare Planspiegelträger, welche jeweils eine Planspiegelfläche tragen, oder
- mehrere gleichartige Planspiegelhalter (7), welche über Kopplungsmittel alternativ in den Strahlengang einkoppelbar sind, wobei ein Planspiegelhalter (7) mindestens einen Planspiegel mit einer Planspiegelfläche (9, 9') hält und mit jedem Planspiegel eine andere dritte Spiegelfläche (3, 3') justierfrei auswählbar ist.

4. Reflexiver Strahlformer nach Anspruch 3, 3. Alternative, bei dem die dritten Spiegelflächen (3, 3') auf einem gemeinsamen Grundträger (6) in voneinander verschiedenen Abständen zur Planspiegelachse fest angeordnet sind und / oder die erste Spiegelfläche (1) auf dem Grundträger (6) fest angeordnet ist, **dadurch gekennzeichnet, dass** die Kopplungsmittel ein erstes Kopplungselement (11, 11') umfassen, welches am Planspiegelhalter (7) ausgebildet oder angeordnet ist, und ein zweites Kopplungselement (12), welches am Grundträger (6) ausgebildet oder angeordnet ist, und mit welchem das erste Kopplungselement (11, 11') kraft- und/oder formschlüssig verbindbar ist.

5. Reflexiver Strahlformer nach einem der Ansprüche 1 bis 4, **dadurch gekennzeichnet, dass** an Spiegelrandflächen der ersten Spiegelfläche (1) des ersten Wölbungstyps und der mehreren dritten Spiegelflächen (3, 3') des zweiten Wölbungstyps asphärische Korrekturen des jeweils anderen Wölbungstyps oder Freiformkorrekturen angebracht sind.

6. Reflexiver Strahlformer nach einem der Ansprüche 1 bis 5, **dadurch gekennzeichnet, dass** die erste gewölbte Spiegelfläche (1) und die mehreren dritten gewölbten Spiegelflächen (3, 3') als Ausschnittsflächen aus Paraboloiden oder aus Zylinderspiegeln mit parabolischem Querschnitt, oder als Freiformflächen ausgebildet sind.

7. Reflexiver Strahlformer nach einem der Ansprüche 1 bis 6, **dadurch gekennzeichnet, dass** eine optische Achse des einfallenden Lichtstrahls, eine optische Achse des austretenden Lichtstrahls und die Planspiegelachse zueinander parallel angeordnet sind.

8. Reflexiver Strahlformer nach einem der Ansprüche 1 bis 7, **dadurch gekennzeichnet, dass** die optische Achse des einfallenden und die optische Achse des austretenden Lichtstrahls auf einer gemeinsamen Geraden und senkrecht zur Planspiegelachse liegen.

9. Verwendung eines reflexiven Strahlformers oder mehrerer, sequentiell und zueinander um einen vorgegebenen Winkel verdreht angeordneter Strahlformer nach einem der Ansprüche 1 bis 8 zur Aufweitung oder Einengung eines kollimierten Lichtstrahls.

10. Verwendung eines reflexiven Strahlformers nach Anspruch 9, **dadurch gekennzeichnet, dass** der vorgegebene Winkel 90° beträgt.

## Claims

1. Reflective beam former for changing the diameter of a collimated light beam, comprising, arranged one after the other in a beam path,
- at least one first mirror surface (1) of a first type of curvature,
- at least one second mirror surface (2,2'), designed as a plane mirror surface (9, 9'), with a plane mirror axis perpendicular to the second mirror surface (2, 2') and
- several third mirror surfaces (3, 3'), curved and differing in their curvatures, of a second type of curvature, wherein one of the two types of curvature is convex and the other is concave, and wherein the shapes of the mirror surfaces are matched to each other, with the result that a collimated light beam entering the beam former via a first mirror surface (1) or a third mirror surface (3, 3') exits the beam former via a third mirror surface (3, 3') or first mirror surface (1) as a collimated light beam,
- **characterized in that**
- the at least one second mirror surface (2,2') is arranged in the beam path between the first mirror surface (1) and a selected one of the several third mirror surfaces (3, 3') such that the first mirror surface (1) and the selected third mirror surface (3, 3') are positioned confocally relative to each other, and
- the beam former comprises selection means for selecting one of the several third curved mirror surfaces (3, 3') by selecting a position for a plane mirror surface (9, 9') in the beam path along the plane mirror axis for the variable adjustment of the ratio of the diameters of the entering and the emerging collimated light beam.

2. Reflective beam former according to claim 1, **characterized in that** the third mirror surfaces (3, 3') are arranged fixed on a common base support (6) at differing distances from the plane mirror axis and / or the first mirror surface (1) is arranged fixed on the base support (6).

3. Reflective beam former according to claim 1 or 2, **characterized in that** the selection means comprise
- a plane mirror support which is movable and/or tiltable along the plane mirror axis for the selection of one of the several third mirror surfaces (3, 3') and which supports the plane mirror surface, or
- several plane mirror supports which can preferably alternatively be introduced into the beam path along the plane mirror axis at predetermined positions and which each support a plane mirror surface, or
- several similar plane mirror holders (7), which can be alternatively coupled into the beam path via coupling means, wherein a plane mirror holder (7) holds at least one plane mirror with a plane mirror surface (9, 9') and, with each plane mirror, another third mirror surface (3, 3') is selectable without adjustment.

4. Reflective beam former according to claim 3, 3^{rd} alternative, in which the third mirror surfaces (3, 3') are arranged fixed on a common base support (6) at differing distances from the plane mirror axis and / or the first mirror surface (1) is arranged fixed on the base support (6), **characterized in that** the coupling means comprise a first coupling element (11, 11'), which is formed or arranged on the plane mirror holder (7), and a second coupling element (12), which is formed or arranged on the base support (6), and to which the first coupling element (11, 11') can be connected in a force- and/or form-fitting manner.

5. Reflective beam former according to one of claims 1 to 4, **characterized in that** aspherical corrections of the respectively other type of curvature or freeform corrections are applied to mirror edge surfaces of the first mirror surface (1) of the first type of curvature and the several third mirror surfaces (3, 3') of the second type of curvature.

6. Reflective beam former according to one of claims 1 to 5, **characterized in that** the first curved mirror surface (1) and the several third curved mirror surfaces (3, 3') are formed as section surfaces of paraboloids or of cylindrical mirrors with parabolic cross section, or as freeform surfaces.

7. Reflective beam former according to one of claims 1 to 6, **characterized in that** an optical axis of the incident light beam, an optical axis of the emerging light beam and the plane mirror axis are arranged parallel to each other.

8. Reflective beam former according to one of claims 1 to 7, **characterized in that** the optical axis of the incident and the optical axis of the emerging light beam lie on a common straight line and perpendicular to the plane mirror axis.

9. Use of a reflective beam former or several beam formers arranged sequentially and rotated relative to each other by a predetermined angle according to one of claims 1 to 8 for widening or narrowing a collimated light beam.

10. Use of a reflective beam former according to claim 9, **characterized in that** the predetermined angle is 90°.

## Revendications

1. Formateur de faisceau réflecteur destiné à changer le diamètre d'un faisceau de lumière collimaté, comprenant, agencés l'un après l'autre dans une trajectoire de faisceau,
- au moins une première surface miroir (1) d'un premier type de courbure,
- au moins une deuxième surface miroir (2,2'), conçue en tant que surface miroir plane (9, 9'), avec un axe de miroir plan perpendiculaire à la deuxième surface miroir (2, 2') et
- plusieurs troisièmes surfaces miroir (3, 3'), courbes et de différentes courbures, d'un second type de courbure, l'un des deux types de courbure étant convexe et l'autre concave, et les formes des surfaces miroir étant adaptées les unes aux autres, si bien qu'un faisceau de lumière collimaté entrant dans le formateur de faisceau par l'intermédiaire d'une première surface miroir (1) ou d'une troisième surface miroir (3,3') sort du formateur de faisceau par l'intermédiaire d'une troisième surface miroir (3, 3') ou d'une première surface miroir (1) en tant que faisceau de lumière collimaté,
- **caractérisé en ce que**
- l'au moins une deuxième surface miroir (2,2') est disposée dans la trajectoire de faisceau entre la première surface miroir (1) et une surface sélectionnée des plusieurs troisièmes surfaces miroir (3, 3') de telle sorte que la première surface miroir (1) et la troisième surface miroir (3, 3') sélectionnée soient positionnées mutuellement avec un foyer commun, et
- le formateur de faisceau comprend des moyens de sélection pour sélectionner l'une des plusieurs troisièmes surfaces miroir courbes (3, 3') en sélectionnant une position d'une surface miroir plane (9, 9') dans la trajectoire de faisceau le long de l'axe de miroir plan pour l'ajustement variable du rapport des diamètres du faisceau entrant et du faisceau de lumière collimaté sortant.

2. Formateur de faisceau réflecteur selon la revendication 1, **caractérisé en ce que** les troisièmes surfaces miroir (3, 3') sont disposées de manière fixe sur un support de base commun (6) à différentes distances de l'axe de miroir plan et / ou la première surface miroir (1) est disposée de manière fixe sur le support de base (6).

3. Formateur de faisceau réflecteur selon la revendication 1 ou 2, **caractérisé en ce que** les moyens de sélection comprennent
- un support de miroir plan déplaçable et/ou inclinable le long de l'axe de miroir plan pour la sélection de l'une des plusieurs troisièmes surfaces miroir (3, 3') et qui supporte la surface de miroir plane, ou
- plusieurs supports de miroir plans qui peuvent en variante de préférence être introduits dans la trajectoire de faisceau le long de l'axe de miroir plan à des positions prédéterminées et qui supportent chacun une surface miroir plane, ou
- plusieurs porte-miroir plans similaires (7), qui peuvent en variante être couplés dans la trajectoire de faisceau par l'intermédiaire d'un moyen de couplage, un porte-miroir plan (7) retenant au moins un miroir plan à surface miroir plane (9, 9') et, avec chaque miroir plan, une autre troisième surface miroir (3, 3') est sélectionnable sans ajustement.

4. Formateur de faisceau réflecteur selon la revendication 3, 3^{ème} variante, dans lequel les troisièmes surfaces miroir (3, 3') sont disposées de manière fixe sur un support de base commun (6) à différentes distances de l'axe de miroir plan et / ou la première surface miroir (1) est disposée de manière fixe sur le support de base (6), **caractérisé en ce que** les moyens de couplage comprennent un premier élément de couplage (11, 11'), lequel est formé ou disposé sur le porte-miroir plan (7), et un second élément de couplage (12), lequel est formé ou disposé sur le support de base (6), et auquel le premier élément de couplage (11, 11') peut être raccordé par ajustement de force et/ou de forme.

5. Formateur de faisceau réflecteur selon l'une quelconque des revendications 1 à 4, **caractérisé en ce que** des corrections asphériques de l'autre type respectif de courbure ou des corrections de forme libre sont appliquées aux surfaces de bord de miroir de la première surface miroir (1) du premier type de courbure et aux plusieurs troisièmes surfaces miroir (3, 3') du second type de courbure.

6. Formateur de faisceau réflecteur selon l'une quelconque des revendications 1 à 5, **caractérisé en ce que** la première surface miroir courbe (1) et les plusieurs troisièmes surfaces miroir courbes (3, 3') sont formées en tant que surfaces de coupe de paraboloïdes ou de miroirs cylindriques à coupe transversale parabolique, ou en tant que surfaces de forme libre.

7. Formateur de faisceau réflecteur selon l'une quelconque des revendications 1 à 6, **caractérisé en ce qu'**un axe optique du faisceau de lumière incident, un axe optique du faisceau de lumière sortant et l'axe de miroir plan sont agencés parallèlement les uns aux autres.

8. Formateur de faisceau réflecteur selon l'une quelconque des revendications 1 à 7, **caractérisé en ce que** l'axe optique du faisceau incident et l'axe optique du faisceau de lumière sortant reposent sur une même ligne droite et perpendiculairement à l'axe de miroir plan.

9. Utilisation d'un formateur de faisceau réflecteur ou de plusieurs formateurs de faisceau agencés séquentiellement et tournés relativement les uns par rapport aux autres par un angle prédéterminé selon l'une quelconque des revendications 1 à 8 pour élargir ou rétrécir un faisceau de lumière collimaté.

10. Utilisation d'un formateur de faisceau réflecteur selon la revendication 9, **caractérisé en ce que** l'angle prédéterminé est de 90°.
